# EUROPÄISCHE PATENTSCHRIFT

(11) **EP 2 320 828 B1**
(45) Veröffentlichungstag und Bekanntmachung des Hinweises auf die Patenterteilung: **25.04.2018**
(21) Anmeldenummer: 09776726.3
(22) Anmeldetag: 15.06.2009
(51) Int. Cl.: A61C 13/00, G06F 17/50

(54) **SYSTEM ZUM ERSTELLEN VON EINEM DATENSATZ, DER EIN ZAHNERSATZTEIL BESCHREIBT, SYSTEM ZUM HERSTELLEN VON EINEM ZAHNERSATZTEIL SOWIE VERFAHREN**
SYSTEM FOR CREATING A DATA RECORD DESCRIBING A DENTAL PROSTHESIS PART, SYSTEM FOR THE PRODUCTION OF A DENTAL PROSTHESIS PART AND METHOD
SYSTÈME D'ÉTABLISSEMENT D'UN JEU DE DONNÉES QUI DÉCRIT UNE PIÈCE DE REMPLACEMENT DE DENT, SYSTÈME DE FABRICATION D'UNE PIÈCE DE REMPLACEMENT DE DENT ET PROCÉDÉ

(30) Priorität: 17.06.2008 DE 102008028748
(43) Veröffentlichungstag der Anmeldung: 18.05.2011
(73) Patentinhaber: Straumann Holding AG, 4002 Basel (CH)
(72) Erfinder: WEBER, Gerhard, 86932 Pürgen (DE)
(74) Vertreter: Grünecker Patent- und Rechtsanwälte PartG mbB
(86) Internationale Anmeldenummer: PCT/EP2009/004281
(87) Internationale Veröffentlichungsnummer: WO 2010/003508

(56) Entgegenhaltungen:
- WO-A-2006/042011
- WO-A-2007/101898
- WO-A-2008/086526
- WO-A2-2006/005284
- DE-A1- 19 922 870
- US-A1- 2005 170 315
- US-A1- 2006 235 660

## Beschreibung

Die Erfindung betrifft ein System zum Erstellen von einem Datensatz, der ein Zahnersatzteil beschreibt, ein System zum Herstellen von einem Zahnersatzteil, dazugehörige Verfahren sowie einen Datensatz.

Für die Herstellung von Zahnersatzteilen mit CAD/CAM-Verfahren ist es bekannt, an einem Computer ein Modell eines Zahnersatzteils zu erstellen, dessen Form in einem Datensatz abgespeichert wird. Mit einem solchen Datensatz kann ein Zahnersatzteil automatisiert hergestellt werden. Zum Beispiel offenbart Dokument WO 2007/101898 A, ein System und Verfahren zum Erstellen von einem Datensatz, der ein Zahnersatzteil beschreibt, wobei das System Mittel aufweist, mit denen ein Datensatz erstellt wird, der umfasst:Einträge zu einer Vielzahl von Elementen, die die Oberfläche oder die Form eines Zahnersatzteils beschreiben, wobei die Elemente dreieckige Flächenelemente sind.

Diese Datensätze beschreiben die gewünschte Form des Zahnersatzteils, sodass diese gewünschte Form mit entsprechenden Herstellungsverfahren hergestellt werden kann. Für spezielle Zahnersatzteile und für einige Herstellungsverfahren ist es jedoch wünschenswert, dass neben der Information zu der Form auch weitere Information nutzbar ist. Um hier eine Verbesserung der Herstellung von Zahnersatzteilen zu erreichen, wird ein System nach Anspruch 1, ein System nach Anspruch 6, ein Verfahren nach Anspruch 8 und ein Verfahren nach Anspruch 10 vorgeschlagen. Bevorzugte Ausführungsformen sind in abhängigen Ansprüchen offenbart.

Das System zum Erstellen von einem Datensatz kann einen Datensatz erstellen, der Einträge zu einer Vielzahl von Elementen umfasst, wobei diese Elemente die Form oder die Oberfläche eines Zahnersatzteils beschreiben. Diese Elemente sind dreieckige Flächenelemente. Für jeden solchen Eintrag sind auch ein, zwei oder mehr Attribute aufgeführt. Für alle Elemente des Datensatzes sind entsprechende Attribute aufgeführt. Das System umfasst vorzugsweise Hardware und/oder Softwarekomponenten zum Entwerfen eines Zahnersatzteils. Hierzu kann auch ein Scanner vorgesehen sein, der ein Modell eines Restzahnbereichs oder einen Restzahnbereich selbst abscannen kann, sodass hiermit ein Datensatz zur Verfügung steht, von dem ausgehend ein Datensatz, der das Zahnersatzteil beschreibt, entworfen werden kann.

Das System umfasst vorzugsweise weiterhin Hardware- und Softwarekomponenten, mit denen eine Mehrzahl von Elementen zusammen ausgewählt werden können und diesen gemeinsam bestimmte Attribute zugeordnet werden können. Hierbei ist es auch möglich, dass die Zuordnung von Attributen automatisiert erfolgt, indem ein Modell beispielsweise automatisch auf bestimmte Bereiche hin untersucht wird und entsprechende Attribute automatisch gesetzt werden. Attribute können auch per Hand gesetzt werden, indem bereits beim computergestützten Entwerfen des Zahnersatzteils entsprechende Bereiche des Zahnersatzteils gleich mit entsprechenden Attributen erstellt werden oder versehen. Auch können beispielsweise mit einer Maus oder einem sonstigen Bedienungsgerät Elemente ausgewählt werden und diesen dann mit entsprechenden Instruktionen ein oder mehrere Attribute zugewiesen werden. Dazu kann z.B. mit einem entsprechenden Eingabegerät in dem visuell dargestellten Modell des Zahnersatzteils ein Bereich markiert bzw. ausgewählt werden. Die Eingabe könnte aber auch durch Auswahl von Elementen anhand bestimmter Kriterien erfolgen. Die Auswahl kann auch in einer tabellarischen Darstellung des Datensatzes vorgenommen werden. Erfindungsgemäß, geben die Attribute eine Produktionsgenauigkeit, aber auch beispielsweise ein Material oder die Farbe für ein Element an. Ein System zum Herstellen von einem Zahnersatzteil kann etwa eine Lasersintervorrichtung sein, kann jedoch auch eine andersartige Einrichtung sein, wie beispielsweise allgemein eine Rapid-Prototyping-Einrichtung. Ein solches System kann einen Datensatz einlesen, wobei auch Informationen zu den Attributen eingelesen werden. Solche Attribute können für die Steuerung des Herstellungsvorgangs verarbeitet werden. Das System kann z.B. mit einer oder mehreren vorgegebenen Aktionen auf ein oder mehrere Attribute reagieren.

Vorzugsweise werden Attributwerte anderen geometrischen Elementen wie etwa Linien zugeordnet, wobei diese geometrischen Elemente bei dem Herstellungsprozess verwendet werden. Solche anderen geometrischen Elemente können beispielsweise durch eine Übertragung der durch Oberflächenelemente gegebenen Form in eine andere geometrische Darstellung, die für die Herstellung benötigt wird, entstehen.

Der Datensatz zeichnet sich dadurch aus, dass nicht nur eine Vielzahl von Elementen eingetragen sind, die die Oberfläche oder Form des Zahnersatzteils beschreiben, sondern auch dadurch, dass für jedes Element ein Attribut aufgeführt ist.

Es können so z. B. mehr als 1.000, 5.000 oder 10.000 Einträge vorhanden sein, die Elemente beschreiben. Für jedes solches Element sind Attributwerte gesetzt.

Es können daneben auch Einträge vorhanden sein, in denen keine Attribute gesetzt sind. Auch dies können mehr als 1.000, 5.000 oder 10.000 Einträge sein.

Der Datensatz kann in Form eines stl-Formats, eines wmf-Formats oder eines anderen Formats zur Abspeicherung einer dreidimensionalen Form vorliegen. stl- oder wmf-Formate werden von kommerziell erhältlichen Rapid-Prototyping-Vorrichtungen erkannt.

Die Attribute werden vorzugsweise in 2 Bytes gespeichert. Die Daten zu den Elementen in einem Eintrag können vorzugsweise 48 Byte belegen.

Bevorzugte Ausführungsformen der Erfindung werden anhand der beiliegenden Figuren erläutert. Dabei zeigt:
- Figur 1: ein Beispiel für Flächenelemente mit Attributen;
- Figur 2: ein Schnitt durch ein Zahnersatzteil;
- Figur 3: die Oberfläche eines Zahnersatzteils;
- Figur 4: verschiedene Flächenelemente;
- Figur 5: ein System zum Erstellen eines Datensatzes sowie ein System zum Herstellen eines Zahnersatzteils.

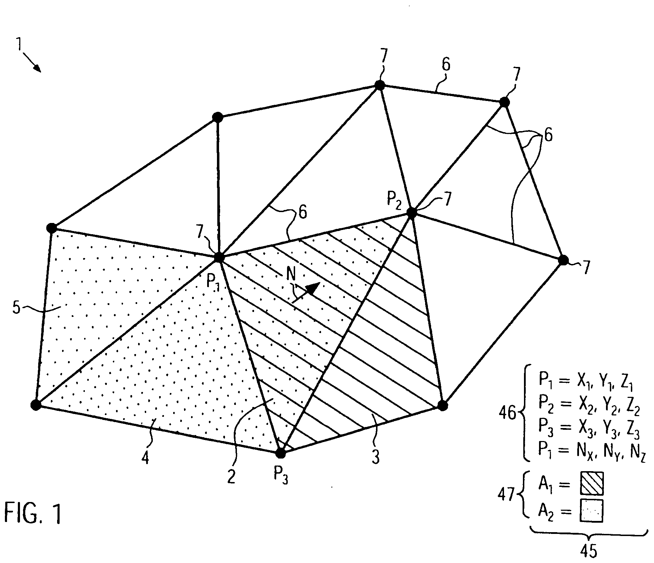

In Figur 1 ist ein Ausschnitt der Oberfläche des Modells eines Zahnersatzteils gezeigt. Das Modell setzt sich aus einer Vielzahl von dreieckigen Flächenelementen zusammen. Benachbarte Flächenelemente haben eine gemeinsame Seite 6 und die Ecken der Dreiecke tragen die Bezugsziffer 7.

Mit einem Netz von solchen Flächenelementen kann jede beliebige dreidimensionale Form approximiert bzw. dargestellt werden.

Zum Abspeichern dieses Modells werden die Daten der einzelnen dreieckigen Flächenelemente gespeichert. Diese umfassen beispielsweise die X-, Y- und Z-Koordinaten der drei Eckpunkte. Dies sind für das Flächenelement 2, z. B. die Punkte P1, P2 und P3.

Weiter wird für dieses Flächenelement ein Normalenvektor N mit seiner X-, Y- und Z-Komponente abgespeichert. Dieser Normalenvektor kann auf 1 normiert sein. Der Normalenvektor dient in der Regel dazu, eine Orientierung des Flächenelements anzugeben, um z. B. die Innen- von der Außenseite der Oberfläche unterscheiden zu können.

Wird jede der X-, Y-, Z-Koordinaten der drei Eckpunkte sowie der X-, Y-, Z-Komponente des Normalenvektors N mit jeweils 4 Byte abgespeichert, sind insgesamt 48 Byte hierfür nötig. Dieser Teil der Daten eines Eintrags in einem Datensatz ist in Figur 1 unter Bezugsziffer 46 dargestellt.

Insbesondere das STL-Dateiformat soll im Folgenden aufgeführt werden:
<STL Datei> := <Name><Facettenanzahl><Facette 1 ><Facette 2>...<Facette n>
<Name> := 80 Bytes langer Dateiname; mit Leerzeichen aufgefüllt
<Facetten Anzahl> := 4 Byte Integer
<Facette> := <Normale><Ecke 1><Ecke 2><Ecke 3><Füllbytes>
<Normale> := Nx, Ny, Nz; auf 1 normiert, jeweils 32 bit Flieskommazahlen <Ecke> := X,Y,Z; jeweils jeweils 32 bit Flieskommazahlen
<Füllbytes> := 2 Füllbytes

Die Datei setzt sich somit im Wesentlichen aus Facetten (dreieckigen Oberflächenelementen) zusammen, wobei jede Facette 50 Byte Speicherplatz zur Verfügung hat, wovon 48 Byte für Daten der Normale und der Eckpunkte und 2 Byte nicht verwendet werden. In diese zwei Byte können Attributwerte gespeichert werden und zwar somit für jede Facette einzeln.

Für die Flächenelemente 2 bis 5 können weiterhin verschiedene Attribute A1, A2 gesetzt werden. Dies ist in Figur 1 durch eine Schraffur der Flächenelemente 2 und 3 dargestellt, die dem Attribut A1 entspricht und weiter sind die Flächenelemente 2, 4 und 5 gepunktet dargestellt, was dem Attribut A2 entspricht.

Wie in Figur 1 zu sehen ist, können Flächenelemente kein Attribut aufweisen (in Figur 1 in der oberen Hälfte), können eines der beiden Attribute A1 oder A2 gesetzt haben oder auch beide Attribute. Auch können mehr als zwei Attribute A1, A2 entsprechend vorgesehen sein. Jedes Attribut kann in einem eigenen Byte gespeichert werden. Es können aber auch mehrere Attribute in einem Byte gespeichert werden oder mehrere Attribute auf mehreren Bytes verteilt sein, wie zum Beispiel 3 oder 4 Attribute auf zwei Bytes.

Die Attribute für einen Eintrag in einem Datensatz sind in Figur 1 mit der Bezugsziffer 47 gekennzeichnet. Der gesamte Eintrag trägt die Bezugsziffer 45.

Für jedes Flächenelement 2 bis 5 ist ein solcher Eintrag 45 vorgesehen.

Soll für ein Flächenelement keines der Attribute gesetzt werden, so bleibt das hierfür vorgesehene Datenfeld leer (z. B. mit Nullen gefüllt).

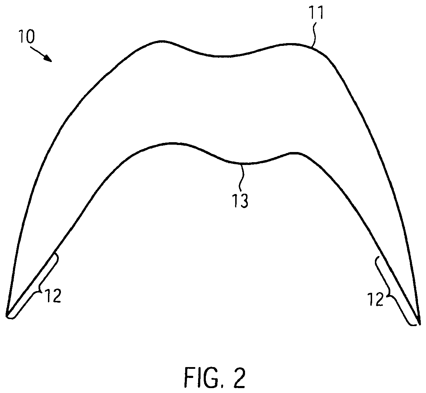

In Figur 2 ist ein Schnitt durch ein Zahnersatzteil 10 gezeigt. Es hat eine Außenseite 11 und eine Innenseite 13. Am unteren Ende der Innenseite 13 ist ein Abschnitt 12 dargestellt, für den beispielsweise eine extrem hohe Produktionsgenauigkeit gewünscht wird, da dieser Bereich den Innenbereich 13 beim Aufsetzen des Zahnersatzteils auf einen Restzahn abschließt. Der Bereich 12 wird z. B. Präparationsgrenze genannt.

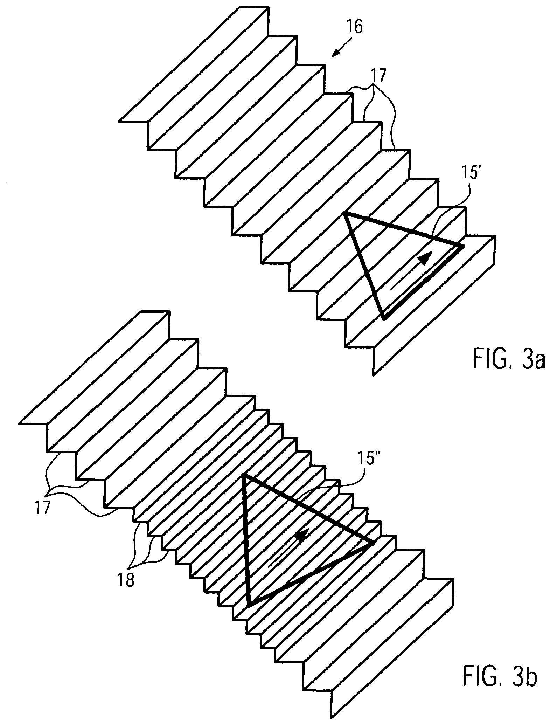

In Figur 3 sind zwei Beispiele dafür gezeigt, wie beim Lasersinterverfahren verschiedene Produktionsgenauigkeiten eingestellt werden können. Beim Lasersintern weisen die Werkstücke in der Regel ein stufenförmiges Profil auf, was sich aus dem lagenweisen Auftragen und Verfestigen des zu sinternden Materials ergibt. Diese Stufen 17 sind in Figur 3a dargestellt. Weiter ist in Figur 3a ein Flächenelement 15' mit der Normalen dargestellt, wie es sich in einem entsprechenden Datensatz befinden könnte.

Wie zu sehen ist, weicht die durch die Stufen ausgebildete Oberfläche 16 von der durch das Flächenelement 15' vorgegebenen Form ab. Um diese Abweichungen zu verringern ist es beispielsweise möglich, das Lasersinterverfahren mit dünneren Materialaufträgen durchzuführen, sodass sich kleinere Stufen 18, wie in Figur 3b dargestellt, ergeben. Im Bereich des Flächenelements 15" ist die Abweichung der realen Form von der gewünschten Form deutlich geringer als in Figur 3a.

Durch die Verwendung der Attribute kann dann beispielsweise der Herstellungsprozess beim Lasersintern dahingehend modifiziert werden, dass je nach gewünschter Produktionsgenauigkeit verschieden hohe Stufen erzeugt werden bzw. verschieden dicke Materialaufträge erfolgen, die durch das Lasersintern dann verfestigt werden.

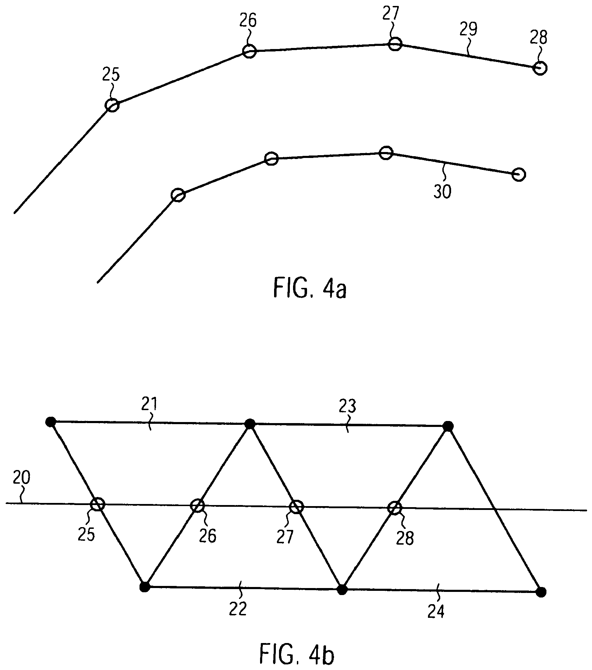

Wie in Figur 3 zu erkennen, werden bei dem Herstellungsprozess Schnitte entlang der Dreiecke benötigt, wobei die Schnitte z.B. horizontal verlaufen können. Dabei können die den Flächenelementen zugeordneten Attribute auf verschiedene Weise verarbeitet werden. Dies soll mit der Figur 4 näher erläutert werden.

In Fig. 4a ist ein Schnitt entlang einer Ebene des Herstellungsprozesses gezeigt. Das Zahnersatzteil hat hier eine Außenfläche 29 und eine Innenfläche 30 deren Schnitte mit der Zeichenebene gerade Linienstücke bilden. Die geraden Linienstücke stoßen an den Eckpunkten 25, 26, 27, 28 zusammen. Die Eckpunkte 25 bis 28 ergeben sich durch den Schnitt einer Ebene 20 mit den dreieckigen Oberflächenelementen, wie in Fig. 4b gezeigt.

Dem Linienstück zwischen den Eckpunkten 25 und 26 kann das/die Attribut(e) des Flächenelements 21 zugeordnet werden, dem Linienstück zwischen den Eckpunkten 26 und 27 das/die Attribut(e) des Flächenelements 22 usw. für die Eckpunkte 27 und 28.

Den Eckpunkten selber kann auch ein Attribut zugeordnet werden. Zum einen ist es hierbei denkbar, dass statt einem Eckpunkt zwei überlappende Eckpunkte vorgesehen sind, wobei jeder Eckpunkt jeweils einer Linie zugeordnet ist. Jedem dieser Eckpunkte wird dann das Attribut der dazugehörigen Linie zugeordnet. Falls jedoch ein Eckpunkt zwischen zwei Linienstücken den beiden Linienstücken zugeordnet ist, kann entweder einer der beiden Attributwerte ausgewählt werden, wobei hierzu entsprechende vordefinierte Regeln eingesetzt werden können, oder es kann ein Mittelwert gebildet werden, falls die Art des Attributwerts dies ermöglicht.

Da die Außenseite 29 und die Innenseite 30 von verschiedenen Flächenelementen beschrieben werden, können in derselben Ebene für die Außenseite und für die Innenseite verschiedene Attribute verwendet werden.

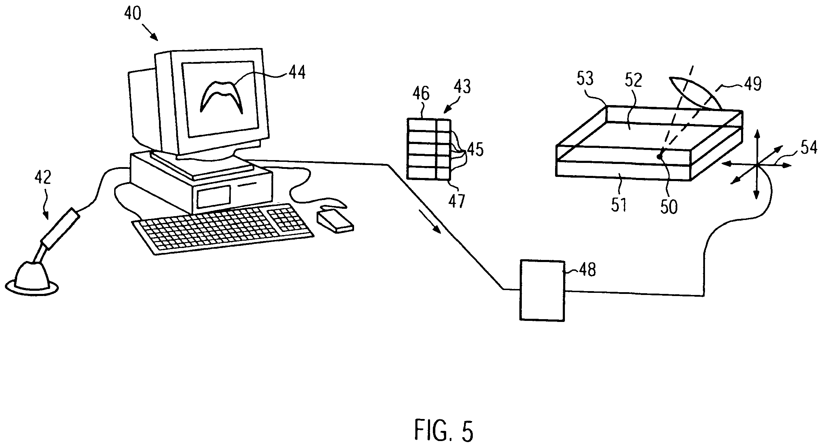

In Figur 5 ist auf der linken Seite ein System 40 dargestellt zum Erstellen von einem Datensatz, der ein Zahnersatzteil beschreibt. Das Modell eines solchen Zahnersatzteils ist auf dem Bildschirm mit Bezugsziffer 44 dargestellt. Mit der Tastatur und der Maus oder sonstigen Eingabemitteln kann das Modell 44 bearbeitet bzw. erstellt werden. Das System 40 kann aus dem Modell dann einen Datensatz erstellen, der unmittelbar durch das System 40 zum Herstellen von einem Zahnersatzteil eingesetzt werden oder der auch verschickt werden kann (z. B. über einen Internetanschluss).

Das System 40 verfügt vorzugsweise weiterhin über einen Scanner 42, mit dem ein Restzahnbereich abgetastet werden kann. Die dabei gewonnenen Daten können als Grundlage eines Modells 44 eines Zahnersatzteils dienen.

Der Datensatz 43 weist verschiedene Einträge 45 auf, wobei jeder Eintrag einen Bereich 46 aufweist, der Elemente angibt, die die Oberfläche oder Form eines Zahnersatzteils beschreiben sowie einen Teil 47 der Attribute für solche Elemente angibt.

In Figur 5 ist rechts ein System zum Herstellen von einem Zahnersatzteil schematisch dargestellt. Hier ist eine Lasersintervorrichtung skizziert, bei der ein Laserstrahl 49 auf einen Fokus 50 fokussiert wird und dort lokal erhitzt, was zu einer Verfestigung des dort befindlichen formlosen Materials führt. Das Material kann beispielsweise flüssig- oder pulver- oder granulatartig sein und durch den Laser lokal in seiner Struktur verändert und dadurch verfestigt werden.

Der Fokus 50 befindet sich hierbei auf der Materialoberfläche 52, wobei auf dieser Oberfläche 52 lagenartig weiteres Material 51 aufgebracht wird und dann dort durch den Laserstrahl 49 lokal verfestigt wird. Hierzu kann der Laserstrahl 49 oder auch eine Aufnahmewanne 53 in allen drei Raumrichtungen verschiebbar sein (siehe Bezugszeichen 54). Auch kann der Laserstrahl 49 entlang der Oberfläche 52 bewegbar sein und die Wanne in einer Richtung senkrecht dazu oder umgekehrt.

Durch die Steuerung der relativen Anordnung des Lasers 49 zu der Wanne 53 können so beliebig geformte Teile lasergesintert werden.

Als Material 51 kommt z. B. Goldstaub oder eventuell auch ein sinterbares keramisches Material in Frage.

Zur Steuerung der relativen Anordnung des Lasers 49 und der Wanne 53 ist eine Steuerung 48 vorgesehen. Diese kann einen Datensatz 43 einlesen, wobei bei dem Einlesen auch die Attributdaten 47 mit zur Herstellung der Zahnersatzteile herangezogen werden Diese relative Steuerung zwischen Laser und Wanne 53 kann durch die Attribute beeinflusst werden.

Die Berücksichtigung der Attributdaten kann beispielsweise dazu führen, dass, wie in Figur 3b dargestellt, für bestimmte Flächenelemente 15" eine höhere Produktionsgenauigkeit erreicht wird, als für andere Bereiche.

## Patentansprüche

1. System (40) zum Erstellen von einem Datensatz (43), der ein Zahnersatzteil beschreibt, wobei das System Mittel aufweist, mit denen ein Datensatz (43) erstellt wird, der umfasst:
Einträge (45) zu einer Vielzahl von Elementen (2, 3, 4, 5), die die Oberfläche oder die Form eines Zahnersatzteils beschreiben, wobei die Elemente (2, 3, 4, 5) dreieckige Flächenelemente sind, wobei für jedes Element (2, 3, 4, 5) ein solcher Eintrag (45) vorgesehen ist und
für jeden solchen Eintrag (45) auch ein, zwei oder mehr Attribute (A1, A2, 47) aufgeführt sind,
**dadurch gekennzeichnet, dass** ein Attribut (A1, A2, 47) des einen, der zwei oder der mehreren Attribute (A1, A2, 47) eine Produktionsgenauigkeit für das Element (2, 3, 4, 5) angibt.

2. System nach Anspruch 1, **dadurch gekennzeichnet, dass** das System (40) Komponenten zum Entwerfen des Zahnersatzteils umfasst, wie z.B. einen Computer mit Hard- und Software zum Entwerfen eines Zahnersatzteils.

3. System nach Anspruch 1 oder 2, **dadurch gekennzeichnet, dass** das System (40) einen Scanner (42) zum Abscannen eines Modells eines Restzahnbereichs oder zum Abscannen eines Restzahnbereichs selbst umfasst.

4. System nach einem der Ansprüche 1 bis 3, **dadurch gekennzeichnet, dass** das System (40) Softwarekomponenten umfasst, mit denen eine Mehrzahl von Elementen (2, 3, 4, 5) zusammen ausgewählt werden können und diesen gemeinsam bestimmte Attribute (A1, A2, 47) zugeordnet werden können.

5. System nach einem der Ansprüche 1 bis 4, **dadurch gekennzeichnet, dass** Attributdaten (A1, A2, 47) es erlauben ein oder zwei der folgenden Attribute (A1, A2, 47) anzugeben: ein Material und/oder eine Farbe für ein Element (2, 3, 4, 5).

6. System (41) zur Herstellung von einem Zahnersatzteil, wie etwa mit dem Lasersintern, wobei ein Datensatz (43) eingelesen werden kann, der Einträge zu einer Vielzahl von Elementen (2, 3, 4, 5) umfasst, die die Oberfläche oder die Form eines Zahnersatzteils beschreiben, wobei die Elemente (2, 3, 4, 5) dreieckige Flächenelemente sind, wobei für jedes Element (2, 3, 4, 5) ein solcher Eintrag (45) vorgesehen ist,
für jeden solchen Eintrag (45) auch ein, zwei oder mehr Attribute (A1, A2, 47) aufgeführt sind,
**dadurch gekennzeichnet, dass** ein Attribut (A1, A2, 47) des einen, der zwei oder der mehreren Attribute (A1, A2, 47) eine Produktionsgenauigkeit für das Element (2, 3, 4, 5) angibt und eine Systemkomponente (48) als Hardwarekomponente oder Softwarekomponente vorgesehen ist, die das/die Attribut/Attribute (A1, A2) für den Herstellungsvorgang verarbeiten kann.

7. System nach Anspruch 6, **dadurch gekennzeichnet, dass** die Systemkomponente (48) weiterhin zur Auswertung von Attributdaten (47) zur Festlegung einer Produktionsgenauigkeit und/oder einer Farbe des Zahnersatzteils und/oder eines Materials vorgesehen ist.

8. Verfahren zum Erstellen eines Datensatzes (43), der ein Zahnersatzteil beschreibt, wobei der Datensatz umfasst:
Einträge (45) zu einer Vielzahl von Elementen, die die Oberfläche oder die Form eines Zahnersatzteils beschreiben, wobei die Elemente (2, 3, 4, 5) dreieckige Flächenelemente sind, wobei für jedes Element (2, 3, 4, 5) ein solcher Eintrag (45) vorgesehen ist und für jeden solchen Eintrag (45) auch ein, zwei oder mehr Attribute (A1, A2, 47) aufgeführt sind,
**dadurch gekennzeichnet, dass** ein Attribut (A1, A2, 47) des einen, der zwei oder der mehreren Attribute (A1, A2, 47) eine Produktionsgenauigkeit für das Element (2, 3, 4, 5) angibt.

9. Verfahren nach Anspruch 8, **dadurch gekennzeichnet, dass** der Datensatz (43) aus Modelldaten, die ein Zahnersatzteil beschreiben, erstellt wird, wobei die Modelldaten vorher in einen Computer eingelesen werden oder mit einem Computer entworfen werden.

10. Verfahren zum Herstellen von einem Zahnersatzteil, wie etwa mit dem Lasersintern, wobei ein Datensatz (43) eingelesen wird, der Einträge (45) zu einer Vielzahl von Elementen (2, 3, 4, 5) umfasst, die die Oberfläche oder die Form eines Zahnersatzteils beschreiben, wobei die Elemente (2, 3, 4, 5) dreieckige Flächenelemente sind, wobei für jedes Element (2, 3, 4, 5) ein solcher Eintrag (45) vorgesehen ist,
für jeden solchen Eintrag (45) auch ein, zwei oder mehr Attribute (A1, A2, 47) aufgeführt sind,
**dadurch gekennzeichnet, dass** ein Attribut (A1, A2, 47) des einen, der zwei oder der mehreren Attribute (A1, A2, 47) eine Produktionsgenauigkeit für das Element (2, 3, 4, 5) angibt und das/die Attribut/Attribute für den Herstellungsvorgang verarbeitet werden.

11. Verfahren nach Anspruch 10, **dadurch gekennzeichnet, dass** Attributwerte von Elementen (21, 22, 23, 24) Linienelementen und/oder Eckpunkten (25, 26, 27, 28) zugeordnet werden, die für das Herstellen verwendet werden.

## Claims

1. System (40) for creating a data record (43) which defines a dental prosthesis part, wherein the system comprises means by which a data record (43) is created, the data record comprising:
entries (45) with respect to a plurality of elements (2, 3, 4, 5) defining the surface or the shape of a dental prosthesis part, wherein the elements (2, 3, 4, 5) are triangular surface elements,
wherein
for each element (2, 3, 4, 5) such an entry (45) is provided and
for each such entry (45) also one, two or more attributes (A1, A2, 47) are listed,
**characterised in that**
one attribute (A1, A2, 47) of the one, the two or the more attributes (A1, A2, 47) defines a product accuracy for the element (2, 3, 4, 5).

2. System of claim 1, **characterised in that** the system (40) comprises components for designing the dental prosthesis part, such as, e.g., a computer with hardware and software for designing a dental prosthesis part.

3. System of claim 1 or 2, **characterised in that** the system (40) comprises a scanner (42) for scanning a model of a remaining tooth portion or for scanning a remaining tooth portion itself.

4. System of one of claims 1 to 3, **characterised in that** the system (40) comprises software components, by which a plurality of elements (2, 3, 4, 5) can jointly be selected and defined attributes (A1, A2, 47) can jointly be associated thereto.

5. System of one of claims 1 to 4, **characterised in that** attribute data (A1, A2, 47) allow defining one or two of the following attributes (A1, A2, 47): a material and/or a colour for an element (2, 3, 4, 5).

6. System (41) for producing a dental prosthesis part, such as by laser sintering, wherein a data record (43) can be read in, which comprises entries with respect to a plurality of elements (2, 3, 4, 5) that define the surface or the shape of a dental prosthesis part, wherein the elements (2, 3, 4, 5) are triangular surface elements,
wherein
for each element (2, 3, 4, 5) such an entry (45) is provided,
for each such entry (45) also one, two or more attributes (A1, A2, 47) are listed,
**characterised in that**
one attribute (A1, A2, 47) of the one, the two or the more attributes (A1, A2, 47) defines a product accuracy for the element (2, 3, 4, 5) and
a system component (48) is provided as hardware component or software component which can process the attribute/s (A1, A2) for the production process.

7. System of claim 6, **characterised in that** the system component (48) furthermore is provided for analysing the attribute data (47) for defining a production accuracy and/or a colour of the dental prosthesis part and/or a material.

8. Method for creating a data record (43) defining a dental prosthesis part, the data record comprising:
entries (45) with respect to a plurality of elements defining the surface or the shape of a dental prosthesis part, wherein the elements (2, 3, 4, 5) are triangular surface elements,
wherein
for each element (2, 3, 4, 5) such an entry (45) is provided and
for each such entry (45) also one, two or more attributes (A1, A2, 47) are listed,
**characterised in that**
one attribute (A1, A2, 47) of the one, the two or the more attributes (A1, A2, 47) defines a product accuracy for the element (2, 3, 4, 5).

9. Method of claim 8, **characterised in that** the data record (43) is created from model data that define a dental prosthesis part, wherein the model data is previously read into a computer or is designed by a computer.

10. Method for producing a dental prosthesis part, such as by laser sintering, wherein a data record (43) is read in, which comprises entries (45) with respect to a plurality of elements (2, 3, 4, 5), defining the surface or the shape of a dental prosthesis part, wherein the elements (2, 3, 4, 5) are triangular surface elements,
wherein
for each element (2, 3, 4, 5) such an entry (45) is provided,
for each such entry (45) also one, two or more attributes (A1, A2, 47) are listed, **characterised in that**
one attribute (A1, A2, 47) of the one, the two or the more attributes (A1, A2, 47) defines a product accuracy for the element (2, 3, 4, 5) and
the attribute/attributes is/are processed for the production process.

11. Method of claim 10, **characterised in that** attribute values of elements (21, 22, 23, 24) are associated to line elements and/or corner points (25, 26, 27, 28) used for production.

## Revendications

1. Système (40) d'établissement d'un jeu de données (43) qui décrit une pièce de remplacement de dent, dans lequel le système présente des moyens qui permettent d'établir un jeu de données (43) qui comprend :
des entrées (45) relatives à une pluralité d'éléments (2, 3, 4, 5) qui décrivent la surface ou la forme d'une pièce de remplacement de dent, les éléments (2, 3, 4, 5) étant des éléments de surface triangulaires,
dans lequel, pour chaque élément (2, 3, 4, 5), il est prévu une telle entrée (45) et, pour chacune de ces entrées (45), un, deux ou plus de deux attributs (A1, A2, 47) sont répertoriés également,
**caractérisé en ce qu'**un attribut (A1, A2, 47) faisant partie des un, deux ou plusieurs attributs (A1, A2, 47) indique une précision de production pour l'élément (2, 3, 4, 5)

2. Système selon la revendication 1, **caractérisé en ce que** le système (40) comprend des composants pour la conception de la pièce de remplacement de dent, comme par exemple un ordinateur avec matériel et logiciel de conception d'une pièce de remplacement de dent.

3. Système selon la revendication 1 ou 2, **caractérisé en ce que** le système (40) comprend un scanner (42) pour numériser un modèle d'une zone de moignon dentaire ou pour numériser une zone de moignon dentaire elle-même.

4. Système selon l'une des revendications 1 à 3, **caractérisé en ce que** le système (40) comprend des composants logiciels grâce auxquels il est possible de sélectionner plusieurs d'éléments (2, 3, 4, 5) ensemble et de leur associer collectivement des attributs (A1, A2, 47) déterminés.

5. Système selon l'une des revendications 1 à 4, **caractérisé en ce que** des données d'attribut (A1, A2, 47) permettent de spécifier un ou deux des attributs (A1, A2, 47) suivants : un matériau et/ou une couleur pour un élément (2, 3, 4, 5).

6. Système (41) de fabrication d'une pièce de remplacement de dent, par exemple par frittage laser, dans lequel un jeu de données (43) qui comprend des entrées relatives à une pluralité d'éléments (2, 3, 4, 5) décrivant la surface ou la forme d'une pièce de remplacement de dent peut être lu, les éléments (2, 3, 4, 5) étant des éléments de surface triangulaires,
dans lequel, pour chaque élément (2, 3, 4, 5), il est prévu une telle entrée (45),
pour chacune de ces entrées (45), un, deux ou plus de deux attributs (A1, A2, 47) sont répertoriés également,
**caractérisé en ce qu'**un attribut (A1, A2, 47) faisant partie des un, deux ou plusieurs attributs (A1, A2, 47) indique une précision de production pour l'élément (2, 3, 4, 5) et
il est prévu un composant de système (48) sous forme d'un composant matériel ou d'un composant logiciel qui peut traiter le/les attribut/s (A1, A2) pour le processus de fabrication.

7. Système selon la revendication 6, **caractérisé en ce que** le composant de système (48) est prévu, en outre, pour analyser des données d'attribut (47) permettant de déterminer une précision de production et/ou une couleur de la pièce de remplacement de dent et/ou un matériau.

8. Procédé d'établissement d'un jeu de données (43) qui décrit une pièce de remplacement de dent, dans lequel le jeu de données comprend :
des entrées (45) relatives à une pluralité d'éléments qui décrivent la surface ou la forme d'une pièce de remplacement de dent, les éléments (2, 3, 4, 5) étant des éléments de surface triangulaires,
dans lequel, pour chaque élément (2, 3, 4, 5), il est prévu une telle entrée (45) et, pour chacune de ces entrées (45), un, deux ou plus de deux attributs (A1, A2, 47) sont répertoriés également,
**caractérisé en ce qu'**un attribut (A1, A2, 47) faisant partie des un, deux ou plusieurs attributs (A1, A2, 47) indique une précision de production pour l'élément (2, 3, 4, 5).

9. Procédé selon la revendication 8, **caractérisé en ce que** le jeu de données (43) est établi à partir de données de modèle qui décrivent une pièce de remplacement de dent, les données de modèle étant préalablement introduites dans un ordinateur ou conçues par un ordinateur.

10. Procédé de fabrication d'une pièce de remplacement de dent, par exemple par frittage laser, dans lequel un jeu de données (43) qui comprend des entrées (45) relatives à une pluralité d'éléments (2, 3, 4, 5) décrivant la surface ou la forme d'une pièce de remplacement de dent est lu, les éléments (2, 3, 4, 5) étant des éléments de surface triangulaires,
dans lequel, pour chaque élément (2, 3, 4, 5), il est prévu une telle entrée (45),
pour chacune de ces entrées (45), un, deux ou plus de deux attributs (A1, A2, 47) sont répertoriés également,
**caractérisé en ce qu'**un attribut (A1, A2, 47) faisant partie des un, deux ou plusieurs attributs (A1, A2, 47) indique une précision de production pour l'élément (2, 3, 4, 5) et le/les attribut/s est/sont traité/s pour le processus de fabrication.

11. Procédé selon la revendication 10, **caractérisé en ce que** des valeurs d'attribut d'éléments (21, 22, 23, 24) sont associées à des éléments linéaires et/ou des points d'angle (25, 26, 27, 28) qui sont utilisés pour la fabrication.
